# EUROPEAN PATENT APPLICATION

(11) **EP 1 591 093 A1**
(43) Date of publication of application: **02.11.2005**
(21) Application number: 05009213.9
(22) Date of filing: 27.04.2005
(51) Int. Cl.: A61G 5/04, B60L 15/20, B60K 17/30

(54) **Wheelchair**

(30) Priority: 27.04.2004 US 565732 P
(71) Applicant: Sunrise Medical HHG Inc., Longmont, Colorado 80503 (US)
(72) Inventor: KOERLIN, James M., Bloomfield, CO 80020 (US)
(74) Representative: Wardley, Diana Mary

(57) **Abstract**

A powered wheelchair comprises three or more wheels for supporting the wheelchair relative to a supporting surface. The three or more wheels are adapted to be steered independently of one another to steer the wheelchair in virtually any direction. At least one of the wheels is adapted to be driven for propelling the wheelchair on the supporting surface.

## Description

### BACKGROUND OF INVENTION

This invention relates in general to motor vehicles and, more particularly, to drive and steering systems for motorized vehicles. Most particularly, the invention relates to powered wheelchair drive and steering systems.

A conventional wheel configuration for a powered wheelchair typically includes two drive wheels (i.e., motor powered wheels) and two or four idler wheels or casters. Steering of the wheelchair is effected by causing the drive wheels to rotate at different speeds and/or directions. A typical wheelchair caster includes a wheel, a fork, and a stem. The stem is adapted to rotate about a vertically oriented axis. Caster stem bearings or bushings allow the stem to rotate smoothly, with low friction. The fork extends from the stem and supports the wheel for rotational movement about an axle. The axle is offset with respect to the stem. The offset distance of the axle with respect to the stem is known as "trail". As the caster is displaced during wheelchair motion, the fork will rotate about the stem such that the wheel points in the direction of travel of the wheelchair. This trailing action is passive, and bears no impact on the steering control of the wheelchair other than to follow in the direction dictated by the drive wheels. That is to say, the casters provide support and stability to the wheelchair but do not play a role in steering the wheelchair or keeping the wheelchair on track.

Powered wheelchairs are provided in three typical configurations, including front wheel drive, mid-wheel drive, or rear wheel drive configurations. Each configuration has certain advantages and disadvantages. Front wheel drive configurations provide greater curb climbing ability because the drive wheels contact the curb first but produce poor traction because the wheelchair occupant's weight is concentrated towards the rear of the wheelchair. These configurations also tend to spin out, or lose control at high speeds. Mid-wheel drive configurations provide the tightest turning radius but also suffer from poor traction and spin out. Rear wheel drive configurations provide the best traction and offer more intuitive steering control because the turning center is positioned about the occupant but suffer from a larger turning radius.

Rear wheel drive configurations provide the best steering control at high speeds because the drive wheels are positioned near or behind the wheelchair's center of mass. Typically, a wheelchair's center of mass is biased towards the rear of the wheelchair because the wheelchair occupant's center of mass and heavy components, like batteries, are situated at the rear. Front and mid-wheel drive configurations suffer from what is commonly referred to as "power spin". Power spin begins when a wheelchair traveling at a high speed in the forward direction makes a sudden turn.
The inertia of the rearward situated center of mass causes the wheelchair to spin forward (i.e., yaw). The spin is exacerbated by one drive wheel losing traction due to the centrifugal force acting on the turning chair, resulting in an uncontrolled spin. The tendency of this effect increases primarily in proportion to the square of the velocity, and other lesser factors, such as the tightness of the turning circle, the stability of the wheelchair wheelbase, and friction factors. The power spin could be prevented if the casters were inhibited from turning in the direction of the spin. However, this is not possible with a conventional wheelchair configuration, as the wheelchair would no longer be able to maneuver if the casters were inhibited from turning.

Increased wheelchair maneuverability within tight confines is desirable.
Mid-wheel drive configurations offer the tightest turning radius because their turning center is situated in the middle of the wheelchair. These wheelchairs can rotate in place within a circular boundary having a diameter that is equal to the greatest length of the wheelchair footprint, which is defined by the points where the wheels contact a supporting surface. Front and rear wheel drive wheelchairs suffer because the turning centers of such wheelchairs are respectively positioned towards the front or rear of the wheelchair. The minimum turning radius is equal to the distance from the turning center, a point located between the drive wheels, to the most distant outlying point on the wheelchair's footprint. Furthermore, front wheel drive wheelchairs suffer because the turning center is not centered about the wheelchair occupant. The wheelchair control is awkward because the rear of the wheelchair sweeps a large, non-intuitive path when turning in tight confines. All conventional wheelchairs are limited in their ability to maneuver. Wheelchair motion is limited to forward/rearward travel, turning in place, and turning along an arc. Purely left or right translation, or motion along a diagonal is not possible.

Conventional wheelchair casters require a large volume of surrounding free space because of the sweep path they require as they rotate about the caster stem. Caster trail accounts for a substantial amount of this space. Typically, casters are positioned near the wheelchair occupant foot region and limit available foot space. Wheelchair designs would benefit by eliminating the caster trail, as this would provide for greater foot space and a more consistent wheelchair footprint.

What is needed is a wheelchair with improved maneuverability in both indoor and outdoor environments.

### SUMMARY OF INVENTION

The present invention is directed toward a powered wheelchair that overcomes the foregoing deficiencies. The wheelchair comprises three or more wheels for supporting the wheelchair relative to a supporting surface. The three or more wheels are adapted to be steered independently of one another to steer the wheelchair in virtually any direction. At least one of the wheels is adapted to be driven for propelling the wheelchair on the supporting surface.

Various objects and advantages of this invention will become apparent to those skilled in the art from the following detailed description of the preferred embodiment, when read in light of the accompanying drawings.

### BRIEF DESCRIPTION OF DRAWINGS

Fig. 1 is a perspective view of a powered wheelchair according to a preferred embodiment of the invention.

Fig. 2 is a perspective view of a wheel according to a preferred embodiment of the invention.

Figs. 3 is a block diagram of a system for driving and steering a wheel according to a preferred embodiment of the invention.

Figs. 4a through 4d are diagrammatic representations of top plan views of the wheelchair in a directional steering mode.

Figs. 5a through 5c are diagrammatic representations of top plan views of the wheelchair in a normal steering mode with the turning axis of the wheelchair along a turning centerline to simulate a mid-wheel drive wheelchair configuration.

Fig. 6 is a diagrammatic representation of a top plan view of the wheelchair in the normal steering mode with the turning axis of the wheelchair along a turning centerline to simulate a rear wheel drive wheelchair configuration.

Fig. 7a is a diagrammatic representation of a top plan view of a sweep path of the wheels according to a preferred embodiment of the invention rotating about a stem.

Fig. 7b is a diagrammatic representation of a top plan view of a sweep path of PRIOR ART wheels rotating about a stem.

Fig. 8 is a diagrammatic representation of a top plan view of wheels according to a preferred embodiment of the invention in an orientation wherein the wheels function as a parking brake.

### DETAILED DESCRIPTION

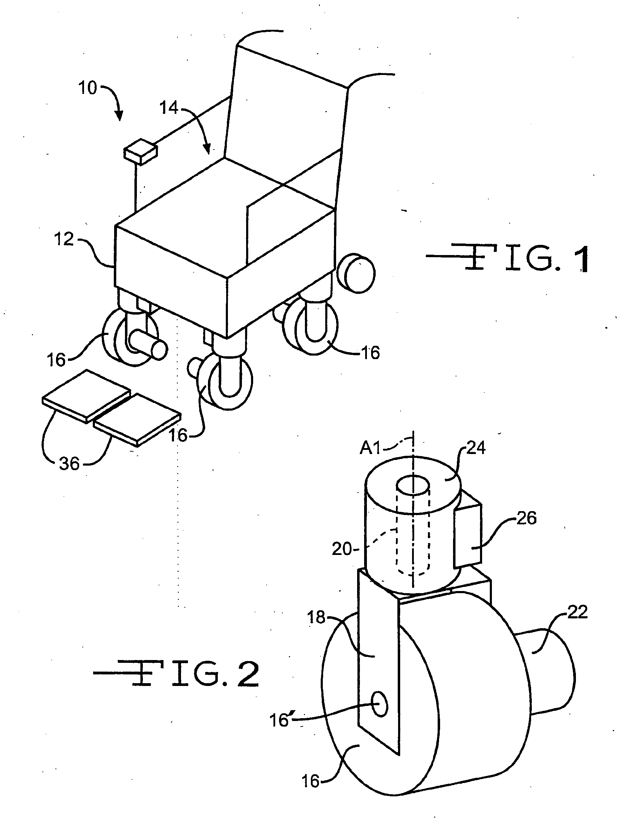

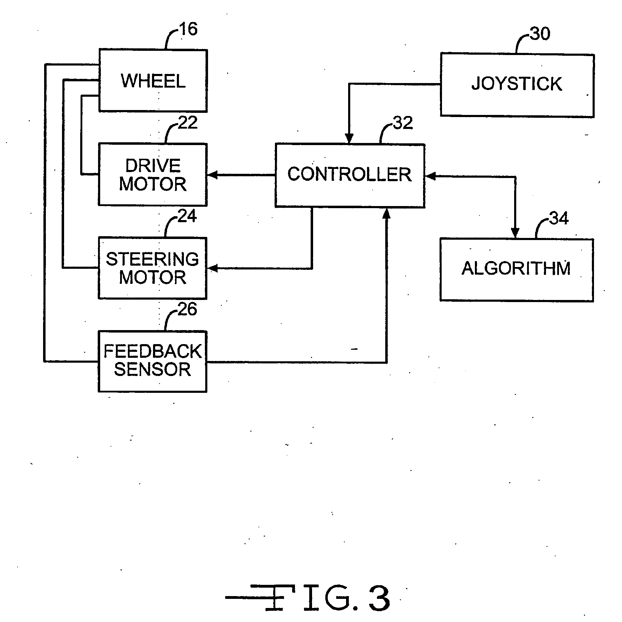

Referring now to the drawings, there is illustrated in Fig. 1 a powered wheelchair 10. The wheelchair 10 comprises a frame 12, a seat 14 for supporting a wheelchair occupant, and a plurality of wheels 16 that are adapted to support the frame 12 for movement relative to a supporting surface. Each wheel 16 resembles a caster. That is to say, each wheel 16 is supported for rotational movement about a respective axle 16' by a fork 18, as clearly shown in Fig. 2. Each fork 18 is supported for rotational movement about a vertical axis A1, which is coincident with a spindle or stem 20, which is preferably centered above the wheel 16, to allow the wheel 16 to steer in the desired direction. At least one wheel 16, and most preferably each wheel 16, is powered by a drive motor 22, such as an in-wheel or near wheel motor, or similar prime mover for propulsion of the wheelchair 10. The motor 22 is situated near the fork 18 and allows the wheel 16 to rotate 360 degrees about the axis A1 that is coincident with the stem 20, while maintaining power to the wheel 16. Each wheel 16 is steered by rotating the wheel 16 by a steering motor 24, such as a stepper motor, a motor/gearbox combination, an electro-magnetic transducer, or similar prime mover, so that the wheel 16 points in a desired direction. The direction of rotation of each wheel 16 is measured by a feedback sensor 26, such as a potentiometer or encoder. As shown in Fig. 3, a steering control device 30, such as a joystick, a switch, a halo, or other suitable device, serves as an input to direct the steering direction and rotational velocity of each wheel 16. The drive motor 22 and the steering motor 24 may be controlled by a closed loop servo system controller 32. The controller 32 may access a programmed control algorithm 34, or alternatively, a look-up table or other suitable instruction or application, to coordinate the steering direction of the wheels 16. In a preferred embodiment of the invention, at least two driving modes are possible, one intended for indoor use, and one for normal or outdoor use.

### Directional Steering Mode (Indoor Use)

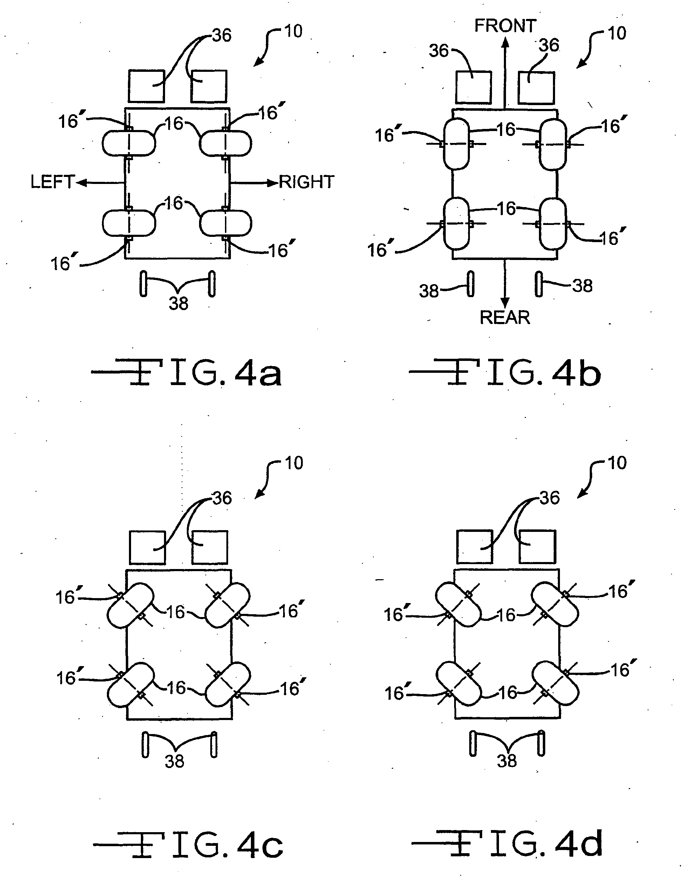

Directional steering mode is illustrated in Figs. 4a through 4d. In the directional steering mode, the wheelchair 10 faces one direction. That is to say, in plan view, the wheelchair 10 is free to translate left/right (see Fig. 4a) and forward/reverse (see Fig. 4b), or a combination of these directions (see Figs. 4c and 4d), but does not rotate. Such motion is achieved by keeping all the wheels 16 aligned parallel with one another but pointed in any direction. Such motion is beneficial to the user when operating in tight confines. For example, the user can translate left or right (see Fig. 4a) when working at a desk or table (not shown) without having to turn away from the working surface. The wheelchair 10 can travel on a diagonal path (see Figs. 4c and 4d), while facing a direction not aligned with that path. The space envelope required for maneuvering is reduced considerably because the wheelchair 10 does not have to rotate. Footrests 36 may extend out in front of the wheelbase. Anti-tip or idler wheels 38 may extend rearward, and rotate freely about a vertical axis. During rotation, the footrest 36 and idler wheels 38 may require a large area to accommodate their swing path. Such rotation in standard wheelchairs makes maneuvering in tight confines difficult. This difficulty is eliminated when using the directional steering mode.

The directional steering mode also offers greater control when traveling at high speeds. For example, the wheelchair 10, when traveling in a fast forward velocity, can move left or right (see Fig. 4a) without rotating. Because the orientation of the wheelchair 10 is aligned with the forward motion of the wheelchair 10, the wheelchair 10 is less likely to spin out. Conventional steering demands that a conventional wheelchair acquire some angle relative to the traveling direction for steering to be achieved. An excessive angle at high speeds could lead to spin out. While the directional steering mode is intended for use indoors, this mode of operation can also be used outdoors.

### Normal Steering Mode (Outdoor and Normal Use)

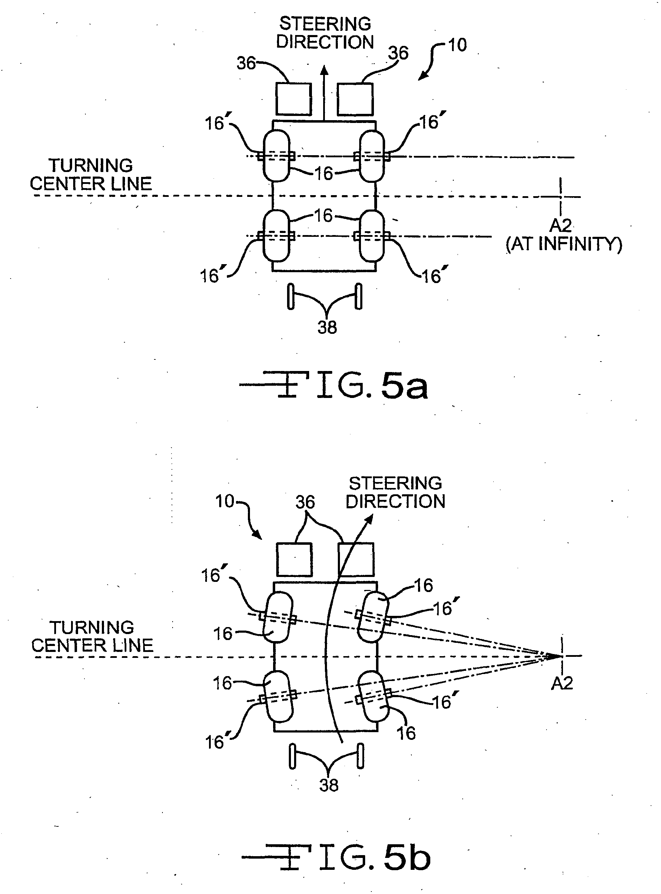

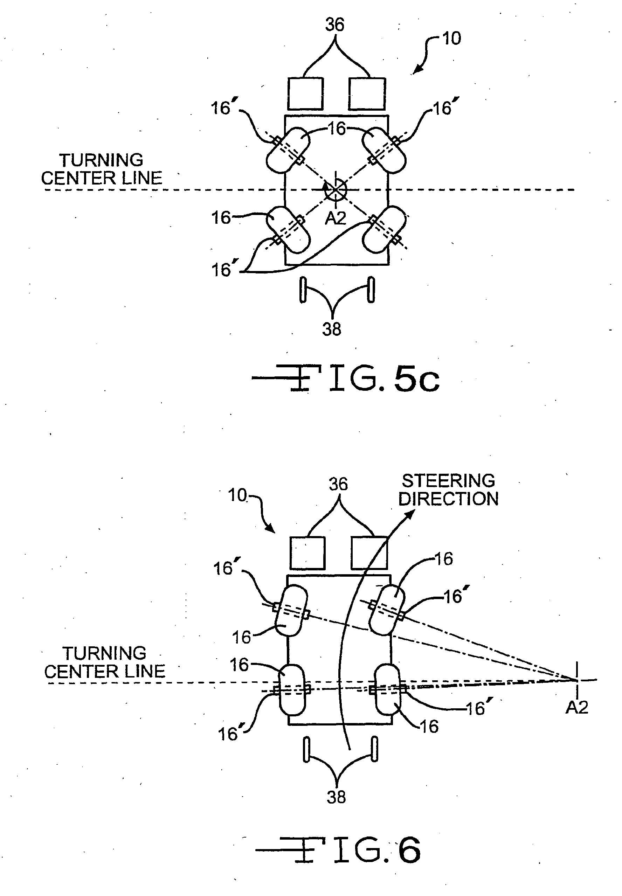

Normal steering mode is illustrated in Figs. 5a through 5c. In normal steering mode, the axle 16' of each wheel 16 is aligned with an instantaneous turning axis A2, which is to say that each axle 16' lies on a line that intersects the instantaneous turning axis A2. The turning axis A2 resides along a turning centerline that runs transverse with respect to the wheelchair. Although the turning centerline preferably runs right to left, it may run front to rear, or diagonally, with respect to the wheelchair. With the turning axis A2 at infinity (i.e., a relatively large distance from the wheelchair) in either direction, the wheelchair 10 drives straight (see Fig. 5a). When the user directs the joystick 30 to turn the wheelchair 10 while moving forward or rearward, the turning axis A2 moves closer toward the wheelchair 10 along the turning centerline (see Fig. 5b). The axle 16' of each wheel 16 still remains aligned with the turning axis A2 and all wheels 16 rotate in the same direction so that all the wheels 16 and the wheelchair 10 travel along arcs concentric with the turning axis A2. When the user directs the joystick 30 to turn the wheelchair in place, the turning axis A2 resides on the turning centerline directly beneath the wheelchair 10 and the wheelchair 10 spins about this axis A2 with no translation (see Fig. 5c). The axle 16' of each wheel 16 still remains aligned with the turning axis A2 such that the wheels 16 travel along a circle centered about the turning axis A2. This produces the tightest turning radius.

The control algorithm 34 for each steering scenario described above is identical. The algorithm 34 maintains the position of each wheel 16 such that the wheel axles 16' always lie on lines that intersect the instantaneous turning axis A2. The control algorithm 34 can be programmed to further customize the steering response of the wheelchair 10. The turning centerline upon which the instantaneous turning axis A2 resides can be moved fore or aft, to produce a different turning response. A user may prefer to have the turning centerline positioned at the center of the wheelchair 10, to produce the tightest overall turning radius, similar to a mid-wheel drive configuration (see Figs. 5a through 5c). Alternatively, the user may prefer to have the turning centerline positioned through his or her head so that turning is more intuitive, similar to a rear wheel drive configuration (see Fig. 6). As yet another alternative, the user may prefer to have the turning centerline positioned at the front of the wheelchair 10, similar to a front wheel drive configuration. Choosing a position for the turning centerline can be accomplished in any suitable matter. For example, the wheelchair 10, or more particularly the steering control device 30, may be provided with switches (not shown) or menu selections (not shown) for positioning the turning centerline in predetermined or desired positions. The steering modes can be selected in a similar manner with switches or menu selections. This may merely cause the algorithm to produce a desired result depending on the position of the turning centerline or steering mode selected.

Note that steering the wheelchair 10 in the two modes described above does not require differential power to the wheels 16. That is to say, that steering in either mode can be achieved by having all the wheels 16 rotate about their respective axles 16' at the same rate. This simplifies the control algorithm 34 considerably. Forward/reverse displacement of the steering control device 30 (i.e., a joystick or similar device) controls wheelchair velocity. Left/right displacement of the steering control device 30 steers the wheelchair 10 by controlling the left/right location of the instantaneous turning axis A2.

Note also, in this invention, differential power to the wheels 16 could be employed in order to achieve improved steering control and traction. Such differential power may require a more complex drive control algorithm 34 that takes into account both the left/right steering directions and the forward/reverse velocity in order to ensure that each wheel 16 rotates about its axle 16' at a rate proportional to the arc length of the travel path, or a distance of each of the wheels 16 from the instantaneous turning axis. Such differential power to the wheels 16 may provide better traction and reduce tire wear because slipping between the wheels 16 may be eliminated.

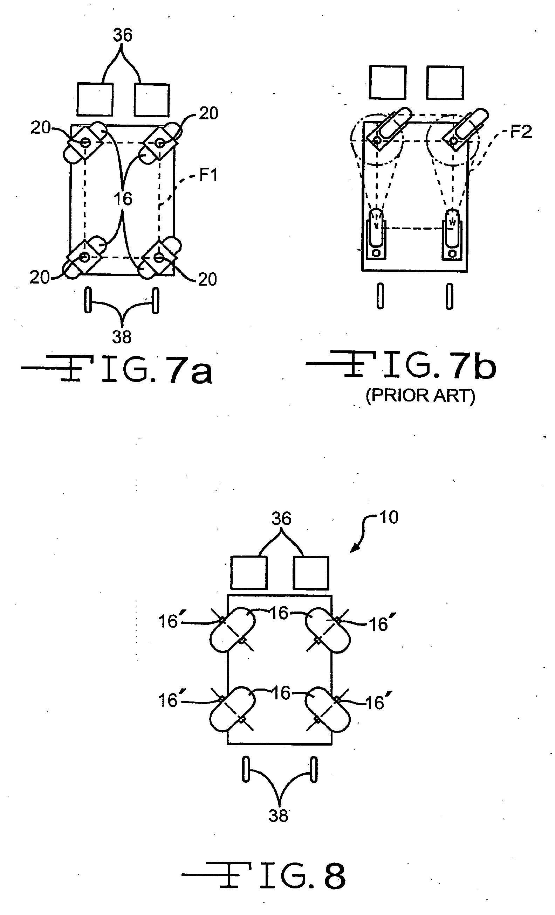

The need for trail or rake found in conventional casters may be eliminated because the wheels 16 are actively steered. This significantly reduces the volume of the sweep path as the wheels 16 rotate about the stem 20 (compare Fig. 7a with prior art Fig. 7b). This has the advantage of freeing up a substantial amount of foot space between the wheels 16. It also reduces the size of the footprint of the wheelchair 10, thereby facilitating maneuverability within tight confines. The footprint of the wheelchair 10 of the instant invention is precisely defined because the point of contact of the wheels 16 with the supporting surface is a single point that does not move relative to the wheelchair frame 12 (compare footprint F 1 in Fig. 7a with the footprint F2 in prior art Fig. 7b). This improves the overall stability of the wheelchair 10. Driving and steering all the wheels 16 may also eliminate problems encountered by conventional powered wheelchairs when traversing a slope. Conventional casters provide no lateral traction when traversing a slope. Therefore, more differential torque is required by the drive wheels in order to maintain an intended direction of travel. This effect becomes more pronounced on steeper slopes, or slopes with lower frictional coefficients. The caster's inability to provide lateral traction makes traversing very steep or slick slopes impossible or dangerous. Because steered wheels 16 according to the preferred embodiment of the invention provide lateral traction, they do not require differential torque and thereby, reduce power consumption. Increased lateral control allows the wheelchair 10 to traverse slopes with increased speed and better tracking and allows safe navigation of steep or slick slopes.

The steered wheels 16 can be oriented in a manner that prevents the wheelchair 10 from moving (see Fig. 8). The wheels 16 in this orientation could be used when parking the wheelchair 10 and thus, eliminate the need for a supplemental and costly parking brake.

All of the wheels 16 in the wheelchair 10 can be drive wheels. This has significant advantages for curb climbing and traversing terrain with obstacles of varying heights. Because all wheels 16 can be powered, the wheels 16 that first encounter the obstacle have the ability to climb over it. In conventional mid or rear wheel drive wheelchairs, curb climbing is more difficult because the wheels that first encounter the obstacle are not driven and must be pushed over the obstacle by the drive wheels.

The ability of the wheelchair 10 to traverse uneven terrain may be further enhanced by all-wheel drive characteristics. Conventional wheelchairs have a tendency to lose traction on uneven terrain because only some of the supporting wheels are driven. These wheelchairs get stuck when the drive wheels lose contact with the ground and the wheelchair remains supported by wheels that are not driven. Conventional wheelchairs often employ complex and expensive suspension systems in order to contend with this problem. These suspension systems are designed to ensure that the drive wheels remain in contact with the supporting surface with sufficient traction. Furthermore, proper weight distribution is critical in conventional wheelchairs to ensure that traction of the driven wheels is maintained. A front wheel drive wheelchair climbing a steep slope tends to load the rear wheels, causing the front drive wheels to lose traction. Likewise, a rear wheel drive wheelchair descending a steep slope tends to load the front wheels, causing the rear drive wheels to lose traction. Such issues may not arise in the wheelchair 10 of the instant invention because all the wheels 10 can be driven.

The wheelchair 10 according to the present invention reduces or eliminates the need for complex and expensive suspension systems because all the wheels 16 may be driven to allow successful navigation of uneven terrain. Even if some of the wheels 16 lose contact with the supporting surface, the wheels 16 remaining in contact with the supporting surface may be powered to propel the wheelchair 10.

Since the wheels 16 may turn through 360 degrees, the motor, depending on the drive motor 22 employed, may sometimes be on the outside of the wheelchair 10. For this reason, the wheelchair 10 may require drive motors 22 that are small in-wheel or near in-wheel motors, such as, for example, the motor disclosed in U.S. Patent No. 6,321,863, issued to Vanjani, on November 27, 2001, the description of which is incorporated herein by reference. However, the motors 22 could be positioned on the inside of the wheels 16 when driving forward. This may reduce the overall width of the wheelchair to enable it to more readily move through doorways. The wheelchair 10 could be equipped with stronger motors in the rear of the wheelchair 10. This would aid in ramp climbing.

A unique controller may be required. It is most preferred that all the wheels 16 are driven with the same power. For this reason, the technical difficulty of differentially driving the wheels 16 may not be required. However, the steering motors 24, which are used to orient each wheel 16, may need to be driven on a coordinated movement.

Because the wheelchair 10 need not be steered differentially, the wheels 16 may need to be oriented before they are energized. This delay may not be present when the wheelchair 10 is steered while moving. However, if the wheels 16 are not pointed in a desired direction to move when starting up from a full stop, the steering motors 24 may require some time to become re-oriented before the wheels 16 can start rotating.

The wheelchair 10 according to the instant invention performs at elevated levels of performance when operated in four-wheel outdoor mode (normal steering mode) and maneuverable indoor mode (directional steering mode). The wheelchair 10 can be programmed to drive like a front, mid or rear wheel drive configuration. The center of turn can be brought directly under the user. Without the need for trail, the wheels 16 may occupy less space in the footprint of the wheelchair 10, leaving more room for the user's feet. The wheelchair 10 is inherently stable at high speeds and will not suffer from fishtailing because there are no rear trailing casters. However, the wheelchair 10 may have a narrower and longer wheelbase than conventional wheelchairs. This may better accommodate seating systems and batteries, and may facilitate passage of the wheelchair through doorways. Lastly, the wheelchair 10 may have some unique driving modes.

It should be appreciated that the steering motor 24 may be linked to the caster stem 20 in any suitable manner, such as, for example, by a rack and pinion, or worm and worn wheel, which mesh together to rotate the wheel 16 about the axis A1 that is coincident with the stem 20. An example of a steering motor is disclosed in U.S. Patent No. 5,547,038, issued to Madweb, on August 20, 1996, the description of which is incorporated herein by reference.

As the steering motor 24 rotates, power may be continuously supplied to the drive motor 24 in any suitable manner. For example, power could be supplied to the drive motor 24 via a cable (not shown) attached to the drive motor 24. However, in this example, the cable may need to unwind, which may limit rotation of the wheel 16. Consequently, this embodiment may be simple to build but may not be easy to drive. As an alternative, slip rings (not shown) may be used to provide power to the drive motor 24. The use of slip rings in providing continuous power to rotating or otherwise moving electrical components is well known and thus will not be described in detail.

The principle and mode of operation of this invention have been explained and illustrated in its preferred embodiment. However, it must be understood that this invention may be practiced otherwise than as specifically explained and illustrated without departing from its spirit or scope.

## Claims

1. A powered wheelchair comprising:
three or more wheels for supporting the wheelchair relative to a supporting surface, the three or more wheels being adapted to be actively steered independently of one another to steer the wheelchair, at least one of the wheels being adapted to be driven to propel the wheelchair on the supporting surface.

2. The wheelchair according to claim 1, wherein the three or more wheels are steered in a steering direction by a steering motor, the steering direction of each of the three or more wheels being measured by a feedback sensor and controlled by a closed loop servo system controller.

3. The wheelchair according to claim 1, wherein each of the three or more wheels is adapted to be propelled by a drive motor and steered 360 degrees about a vertical steering axis by a steering motor.

4. The wheelchair according to claim 1, wherein each of the three or more wheels is adapted to be steered in a steering direction that is dictated by a control algorithm that receives input from a steering control device and determines a corresponding steering direction of each of the wheels.

5. The wheelchair according to claim 1, wherein each of the three or more wheels is adapted to be rotated about an axle and a control algorithm is adapted to calculate an instantaneous turning axis and determine a corresponding steering direction wherein the axle of each of the three or more wheels aligns with the instantaneous turning axis.

6. The wheelchair according to claim 5, wherein the control algorithm allows translation of the wheelchair without wheelchair rotation by steering the three or more wheels so that the three or more wheels align parallel with one another.

7. The wheelchair according to claim 5, wherein the three or more wheels are differentially driven by respective drive motors so that each of the three or more wheels is rotated at a rate of rotation that is proportional to a distance of each of the three or more wheels from the instantaneous turning axis.

8. The wheelchair according to claim 1, wherein the three or more wheels can be steered in directions to insure that the wheelchair will not move when parked.

9. The wheelchair according to claim 1, wherein the three or more wheels have substantially no trail.

10. The wheelchair according to claim 1, further comprising one or more idler wheels that rotate freely about a vertical axis.

11. A powered wheelchair comprising:
three or more drive wheels for supporting the wheelchair relative to a supporting surface and propelling the wheelchair on the supporting surface, the three or more drive wheels being adapted to be steered independently of one another to steer the wheelchair.

12. The wheelchair according to claim 11, wherein the three or more drive wheels are steered in a steering direction by a steering motor, the steering direction of each of the three or more drive wheels being measured by a feedback sensor and controlled by a closed loop servo system controller.

13. The wheelchair according to claim 11, wherein each of the three or more drive wheels is adapted to be propelled by a drive motor and steered 360 degrees about a vertical steering axis by a steering motor.

14. The wheelchair according to claim 11, wherein each of the three or more drive wheels is adapted to be steered in a steering direction that is dictated by a control algorithm that receives input from a steering control device and determines a corresponding steering direction of each of the wheels.

15. The wheelchair according to claim 11, wherein each of the three or more drive wheels is adapted to be rotated about an axle and a control algorithm is adapted to calculate an instantaneous turning axis and determine a corresponding steering direction wherein the axle of each of the three or more drive wheels aligns with the instantaneous turning axis.

16. The wheelchair according to claim 15, wherein the control algorithm allows translation of the wheelchair without wheelchair rotation by steering the three or more drive wheels so that the three or more drive wheels align parallel with one another.

17. The wheelchair according to claim 15, wherein the three or more drive wheels are differentially driven by respective drive motors so that each of the three or more drive wheels is rotated at a rate of rotation that is proportional to a distance of each of the three or more drive wheels from the instantaneous turning axis.

18. The wheelchair according to claim 11, wherein the three or more drive wheels can be steered in directions to insure that the wheelchair will not move when parked.

19. The wheelchair according to claim 11, wherein the three or more drive wheels have substantially no trail.

20. The wheelchair according to claim 11, further comprising one or more idler wheels that rotate freely about a vertical axis.

21. A powered wheelchair comprising:
three or more wheels for supporting the wheelchair relative to a supporting surface, the three or more wheels being adapted to be actively steered independently of one another to steer the wheelchair, at least one of the three or more wheels being adapted to be driven to propel the wheelchair on the supporting surface, the wheelchair having a directional steering mode wherein the wheelchair faces one direction and is free to selectively translate left, right, forward, reverse, or diagonally without rotating the wheelchair.

22. The wheelchair according to claim 21, wherein the directional steering mode is achieved by keeping the three or more wheels aligned parallel with one another but pointed in any direction.

23. The wheelchair according to claim 21, further having a normal steering mode, wherein each of the three or more wheels has an axle that aligns with an instantaneous turning axis that resides along a turning centerline that runs transversely with respect to the wheelchair.

24. The wheelchair according to claim 23, wherein the turning centerline runs right to left with respect to the wheelchair.

25. The wheelchair according to claim 23, wherein the turning centerline can be selectively positioned fore or aft with respect to the wheelchair to selectively simulate front, mid and rear wheel drive configurations.

26. The wheelchair according to claim 23, wherein the wheelchair is adapted switch between the normal steering mode and the directional steering mode.

27. The wheelchair according to claim 23, wherein the axle of each the three or more wheels remain aligned with the turning axis and the three or more wheels rotate in the same direction so that the three or more wheels and the wheelchair travel along arcs concentric with the turning axis when the wheelchair is turning.
